# EUROPÄISCHE PATENTSCHRIFT

(11) **EP 1 675 699 B1**
(45) Veröffentlichungstag und Bekanntmachung des Hinweises auf die Patenterteilung: **09.05.2007**
(21) Anmeldenummer: 04765463.7
(22) Anmeldetag: 22.09.2004
(51) Int. Cl.: B23B 27/04

(54) **SCHNEIDKÖRPER, INSBESONDERE ZUM STECH- UND LÄNGSDREHEN**
CUTTING ELEMENT, PARTICULARLY FOR PARTING AND LONGITUDINAL TURNING
APPAREIL DE COUPE, NOTAMMENT POUR LE TOURNAGE LONGITUDINAL ET L'USINAGE PAR PERCAGE

(30) Priorität: 27.09.2003 DE 10344961
(43) Veröffentlichungstag der Anmeldung: 05.07.2006
(73) Patentinhaber: KENNAMETAL INC., Latrobe, PA 15650-0231 (US)
(72) Erfinder: HAVRDA, Franz, 91091 Grossenseebach (DE)
(74) Vertreter: Dörr, Matthias
(86) Internationale Anmeldenummer: PCT/EP2004/010588
(87) Internationale Veröffentlichungsnummer: WO 2005/035173

(56) Entgegenhaltungen:
- EP-A- 0 568 512
- DE-U1- 29 503 246
- US-A- 5 676 495
- PATENT ABSTRACTS OF JAPAN Bd. 014, Nr. 315 (M-0995), 6. Juli 1990 (1990-07-06) & JP 02 106204 A (TOSHIBA TUNGALOY CO LTD), 18. April 1990 (1990-04-18)

## Beschreibung

Die Erfindung betrifft einen Schneidkörper, insbesondere zum Stech- und Längsdrehen, mit einer Haupt- und zwei Nebenschneiden, wobei sich an jede Schneide eine Spankammer anschließt, und mit einer die Spankammern begrenzenden bogenförmigen Spanleitrippe, deren Bogenöffnung der Hauptschneide zugewandt ist. Ein derartiger Schneidkörper ist beispielsweise aus der DE 295 03 246 U1 bekannt.

Weitere zum Stech- und Längsdrehen ausgebildete Schneidkörper sind beispielsweise aus JP 02106204 A, US 5,676,495 sowie EP 0 568 512 A1 zu entnehmen. Alle diese Schneidkörper weisen eine in etwa bogenförmige Spanleitrippe auf. Die bogenförmige Ausbildung ist bei der Ausgestaltung gemäß der JP 02106204 durch winklig zueinander angeordnete Teilstücke geschaffen.

Bei einem Werkzeug der aus der DE 295 03 246 U1 bekannten Art wird beim Stechdrehen die Hauptschneide und beim Längsdrehen eine der Nebenschneiden zur Zerspanung eingesetzt. Die Spanformung erfolgt beim Stechdrehen hauptsächlich durch die Innenseite der bogenförmigen Spanleitrippe und beim Längsdrehen hauptsächlich durch die Außenseite der Spanleitrippe. Besonders problematisch ist es, die Spanleitrippe gleichermaßen für Stechdreh- wie für Längsdreh-Operationen auszulegen.

Der Erfindung liegt die Aufgabe zu Grunde, einen Schneidkörper mit einer Spanleitgeometrie anzugeben, die eine besondere Eignung sowohl zum Stechdrehen als auch zum Längsdrehen aufweist.

Diese Aufgabe wird erfindungsgemäß gelöst durch einen Schneidkörper mit den Merkmalen des Anspruchs 1. Dieser zum Stech- und Längsdrehen vorgesehene Schneidkörper weist eine Hauptschneide, zwei an diese anschließende Nebenschneiden sowie eine bogenförmige Spanleitrippe auf. Unter bogenförmigen Spanleitrippen werden hierbei auch solche Spanleitrippen verstanden, die eine sich zur Hauptschneide hin öffnende V-Form aufweisen. Zwischen der Spanleitrippe und den einzelnen Schneiden sind jeweils Spankammern, nämlich eine Stechspankammer an der Hauptschneide und Langdreh-Spankammern an den Nebenschneiden, gebildet. Zusätzlich sind Eckspanformer im Bereich der Schneidenecken zwischen Hauptschneide und Nebenschneiden vorgesehen. Die Eckspanformer befinden sich hierbei zwischen den Schneidenecken und den diesen zugewandten Enden der U-, V- oder bogenförmigen Spanleitrippe. Die Eckspanformer sind entweder als Spanformmulde, als Spanformerhebung oder als Kombination aus einer Vertiefung und einer Erhebung in der Oberfläche des Schneidkörpers ausgebildet. Mittels der Eckspanformer ist eine definierte Spanformbildung auch im Bereich des Schneidenecks, welches sich sowohl beim Stechdrehen als auch beim Längsdrehen im Eingriff mit dem Werkstück befindet, gegeben. Durch die Anordnung der Eckspanformer zwischen den den Schneidecken zugewandten Enden der Spanleitrippe und den Schneidenecken, d. h. in besonderes geringem Abstand zu den Schneidenecken, ist der Schneidkörper besonders auch für die Abtragung sehr kleiner Aufmaße geeignet.

In bevorzugter Ausführungsform ist der Eckspanformer bogenförmig, mit dem benachbarten Ende der Spanleitrippe zugewandter Bogenöffnung, ausgebildet. Hierbei weist der Eckspanformer einen Bogenabschnitt auf, dessen äußerer Radius vorzugsweise mindestens 80% und höchstens 95% des Radius der eine Nebenschneide mit der Hauptschneide verbindenden Eckschneidkante beträgt. Der Bogenabschnitt kann spiegelsymmetrisch zu einer Winkelhalbierenden zwischen der Hauptschneide und der Nebenschneide sein. In bevorzugter Ausgestaltung weicht der Bogenabschnitt jedoch von einer solchen symmetrischen Form zumindest geringfügig ab: An einen der Hauptschneide zugewandten ersten Spanformerabschnitt des Bogenabschnitts schließt sich ein einer der Nebenschneiden zugewandter zweiter Spanformerabschnitt nahtlos an, wobei die Breite des Bogenabschnitts des Eckspanformers, senkrecht zur jeweils benachbarten Schneidkante gemessen, vom ersten Spanformerabschnitt zum zweiten Spanformerabschnitt abnimmt. Jeder der Spanformerabschnitte erstreckt sich bevorzugt über einen Winkel, der mindestens ein Viertel und höchstens die Hälfte des von der Eckschneidkante beschriebenen Winkels beträgt. Der gesamte Bogenabschnitt des Eckspanformers erstreckt sich damit maximal über den Winkel, der zwischen der Hauptschneide und einer Nebenschneide gebildet ist, das heißt über den Winkel, den die Eckschneidkante beschreibt. Mindestens erstreckt sich der Bogenabschnitt des Eckspanformers über die Hälfte des von der Eckschneidkante beschriebenen Winkels.

Nach einer bevorzugten Weiterbildung weist der Eckspanformer einen an den Bogenabschnitt anschließenden, sich in Richtung einer Nebenschneide erstreckenden ersten Linearabschnitt sowie einen ebenfalls an den Bogenabschnitt anschließenden, sich in Richtung der Hauptschneide erstreckenden zweiten Linearabschnitt auf, wobei die Länge eines jeden Linearabschnitts höchstens die Hälfte des äußeren Radius des Eckspanformers beträgt.

Der Schneidkörper definiert eine Ebene, deren Lage im Wesentlichen durch die Lage der Haupt- und Nebenschneiden gegeben ist. Im Fall einer etwa quaderförmigen Ausbildung des Schneidkörpers mit zwei in der Draufsicht an gegenüberliegenden Seiten angeordneten Hauptschneiden liegen beide Hauptschneiden in dieser Ebene oder haben zu dieser den gleichen Abstand. Die Ebene gibt somit zumindest annähernd die Lage der Spanflächen, sowohl der mindestens einen Hauptschneide als auch der mindestens zwei Nebenschneiden, an. Der Winkel, welchen die Oberfläche des Eckspanformers mit der genannten Ebene einschließt, wird als Flankenwinkel bezeichnet. Schließt die Ebene mit der Oberfläche des zu bearbeitenden Werkstücks einen rechten Winkel ein, so entspricht der Flankenwinkel dem Spanwinkel.

Im Bereich des Bogenabschnitts weist der Eckspanformer vorzugsweise einen Flankenwinkel auf, welcher mindestens das 1,5-Fache und höchstens das Zweifache des Flankenwinkels im Bereich eines Linearabschnitts beträgt. Der Eckspanformer ist damit im der Mitte der Eckschneidkante benachbarten Bereich, d.h. am Schneideneck zwischen Haupt- und Nebenschneidkante, besonders stark konturiert. Dies unterstützt die besondere Eignung des Schneidkörpers sowohl für Stech- als auch für Längsdrehbearbeitung.

Die Hauptschneide ist vorzugsweise derart geformt, dass ein zwischen den Enden der Spanleitrippe angeordneter Mittelabschnitt der Hauptschneide in Relation zu den Schneidenecken abgesenkt ist. Damit kommt beim Stechdrehen, soweit ein Freiwinkel größer Null geben ist, der Mittelabschnitt erst nach den Schneidenecken mit dem Werkstück in Kontakt. Die Spanformung an den Eckspanformern setzt bereits vor der Spanformung durch die Spanleitrippe ein. Jeder Eckspanformer ist vorzugsweise in allen Raumrichtungen geringer oder zumindest nicht größer dimensioniert als die Spanleitrippe. Insbesondere ist die Höhe des Eckspanformers, d. h. dessen Ausdehnung senkrecht zu den Schneiden, nicht größer als die Höhe der Spanleitrippe, wobei die Spanleitrippe nicht notwendigerweise eine konstante Höhe aufweist, sondern beispielsweise eine zur Hauptschneide hin abnehmende Höhe aufweist. Des Weiteren ist die Höhe des Eckspanformers bevorzugt geringer als die Absenkung des Mittelabschnitts der Hauptschneide. Die Breite des Eckspanformers, d. h. dessen Ausdehnung in Erstreckungsrichtung der Hauptschneide, beträgt vorzugsweise mindestens 15 % und maximal 30 % der Breite der Hauptschneide.

Der Schneidkörper weist in bevorzugter Ausgestaltung eine rechtwinklig zur Hauptschneide verlaufende Spannrippe auf, an welche sich seitliche ebene Oberflächenbereiche anschließen, die in Relation sowohl zu den Spankammern als auch zur Spanleitrippe erhaben sind. Die genannten ebenen Oberflächenbereiche grenzen jeweils an einer Stufe an eine Nebenschneide, wobei diese Stufe auch als Spanstufe genutzt werden kann. Während damit in vorteilhafter Weise eine Stufe zwischen der Langdreh-Spankammer und der anschließenden ebenen Oberfläche gegeben ist, sollte zwischen der Langdreh-Spankammer und der im Vergleich zur Spanleitrippe hohen Spannrippe ein größerer Abstand gegeben sein, wobei insbesondere ein an der Nebenschneide gebildeter Span nicht direkt, ohne vorherige Spanformung, zur Spannrippe geleitet werden sollte. Dies ist bevorzugt durch eine sich an die Spanleitrippe auf deren der Hauptschneide abgewandter Seite anschießende Querrippe erreicht. Diese Querrippe ist bevorzugt breiter als die Spannrippe, füllt jedoch den Abstand zischen den beiden gegenüberliegenden Nebenschneiden nicht vollständig aus. Die Höhe der Querrippe entspricht vorzugsweise zumindest im an die Spanleitrippe anschließenden Bereich der Höhe der Spanleitrippe im selben Bereich, d.h. die Querrippe schließt bündig an die Spanleitrippe an. Ähnlich der Spanleitrippe weist auch die Querrippe nicht notwendigerweise eine konstante Höhe auf, sondern steigt beispielsweise zur Spannrippe hin an.

Der Vorteil der Erfindung liegt insbesondere darin, dass durch die Kombination einer bogenförmigen Spanleitrippe mit von dieser abgesetzten Eckspanformern sowohl bei Stechdreh- als auch bei Längsdreh-Bearbeitung weitgehend unabhängig von der Einstichtiefe eine gezielte Spanformung gegeben ist.

Mehrere Ausführungsbeispiele werden nachfolgend anhand der Zeichnungen näher erläutert. Hierin zeigen:
- Fig. 1: in perspektivischer Ansicht ein erstes Ausführungsbeispiel eines Schneidkörpers,
- Fig. 2 a,b: eine ausschnittsweise Draufsicht auf den Schneidkörper nach Fig. 1,
- Fig. 3 bis 6: verschiedene Schnitte durch den Schneidkörper nach Fig. 1,
- Fig. 7: in perspektivischer Ansicht ein zweites Ausführungsbeispiel eines Schneidkörpers,
- Fig. 8 a,b: eine ausschittsweise Draufsicht auf den Schneidkörper nach Fig. 7, und
- Fig. 9 bis 12: verschiedene Schnitte durch den Schneidkörper nach Fig. 7,
- Fig. 13 a,b: ausschnittsweise in Draufsicht ein weiteres Ausführungsbeispiel eines Schneidkörpers, und
- Fig. 14 a,b: jeweils einen Schnitt des Schneidkörpers nach Fig. 13 a,b.

Einander entsprechende oder gleich wirkende Teile sind in allen Figuren mit den gleichen Bezugszeichen versehen.

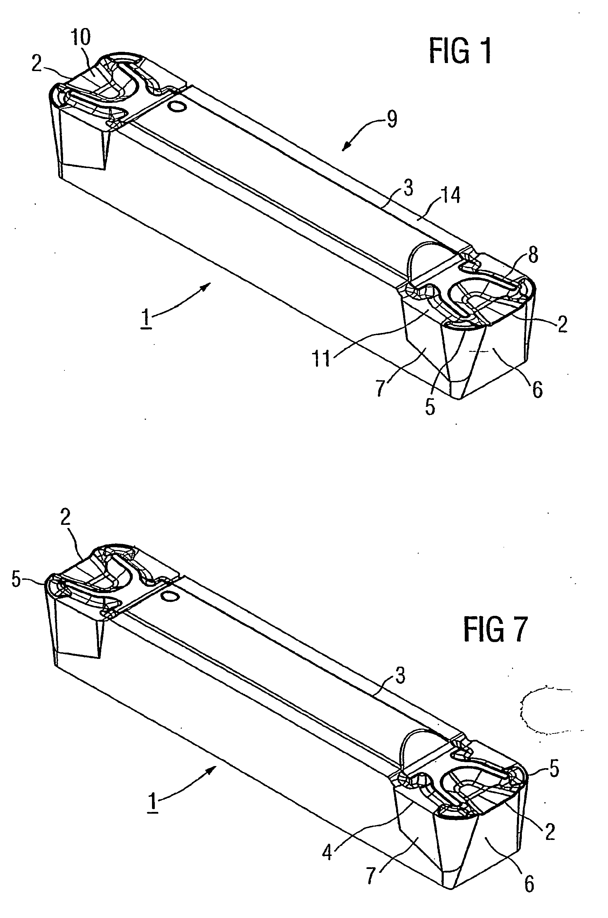

Ein in Fig. 1 dargestellter Schneidkörper 1 ist als Zerspanungswerkzeug zum Stech- und Längsdrehen vorgesehen und im Wesentlichen spiegelsymmetrisch in der Grundform eines langgestreckten Quaders mit zwei an dessen Schmalseiten angeordneten Hauptschneiden 2 aufgebaut. Eine Spannrippe 3 dient der Einspannung des beispielsweise aus beschichtetem oder unbeschichtetem Hartmetall gefertigten Schneidkörpers 1. An jede Hauptschneide 2 schließen sich zwei Nebenschneiden 4 an jeweils einem Schneideneck 5 an. An die Schneiden 2, 4 schließen sich Freiflächen 6,7 an, welche in Relation zur quaderförmigen Grundform des Schneidkörpers 1 derart schräg gestellt sind, dass sich beim Stech- bzw. Längsdrehen jeweils ein ausreichender Freiwinkel ergibt. Eine Spanleitrippe 8 auf der Oberseite 9 des Schneidkörpers 1 ist U- oder bogenförmig ausgebildet, wobei die Bogenöffnung der Hauptschneide 2 zugewandt ist. Zwischen der Spanleitrippe 8 und der Hauptschneide 2 ist eine Stechspankammer 10 gebildet, während zwischen der Spanleitrippe 8 und den Nebenschneiden 4 jeweils eine Langdreh-Spankammer 11 gebildet ist. Die Stechspankammer 10 verjüngt sich nach hinten, d. h. in Richtung zur Spannrippe 3, so dass die Breite an der Hauptschneide 2 gebildeter Späne während der Spanformung an der Spanleitrippe 8 verringert wird. Zwischen den Enden 12 der U-förmigen Spanleitrippe 8 und den Schneidenecken 5 befindet sich jeweils ein Eckspanformer 13, welcher die Stechspankammer 10 von einer der Langdreh-Spankammern 11 trennt. Jeder Eckspanformer 13 weist eine bogenförmige, der Kontur der Schneidenecke 5 angepasste Form auf. Insbesondere bei geringen Einstichtiefen von beispielsweise wenigen Zehntel Millimetern ermöglicht der in diesem Ausführungsbeispiel als Spanformmulde ausgebildete Eckspanformer 13 sowohl bei Stechdreh- als auch bei Längsdrehoperationen eine definierte Spanbildung.

Im Fall größerer Einstichtiefen ergänzen sich die Wirkungen der Eckspanformer 13 und der Spanleitrippe 8. Insbesondere bei der Zerspanung weicher Werkstoffe ist auch eine zwischen einer in Längsrichtung des Schneidkörpers 1 verlaufenden an die Spannrippe 3 angrenzenden ebenen Oberfläche 14 und der Langdreh-Spankammer 11 gebildete Kante 15 als Spanleitstufe nutzbar. Des Weiteren ist zur Spanformung eine Querrippe 16 nutzbar, welche zwischen der gebogenen Spanleitrippe 8 und einer Flanke 17 der Spannrippe 3 angeordnet ist, wobei ein bündiger Übergang zwischen der Spanleitrippe 8 und der Querrippe 16 gegeben ist.

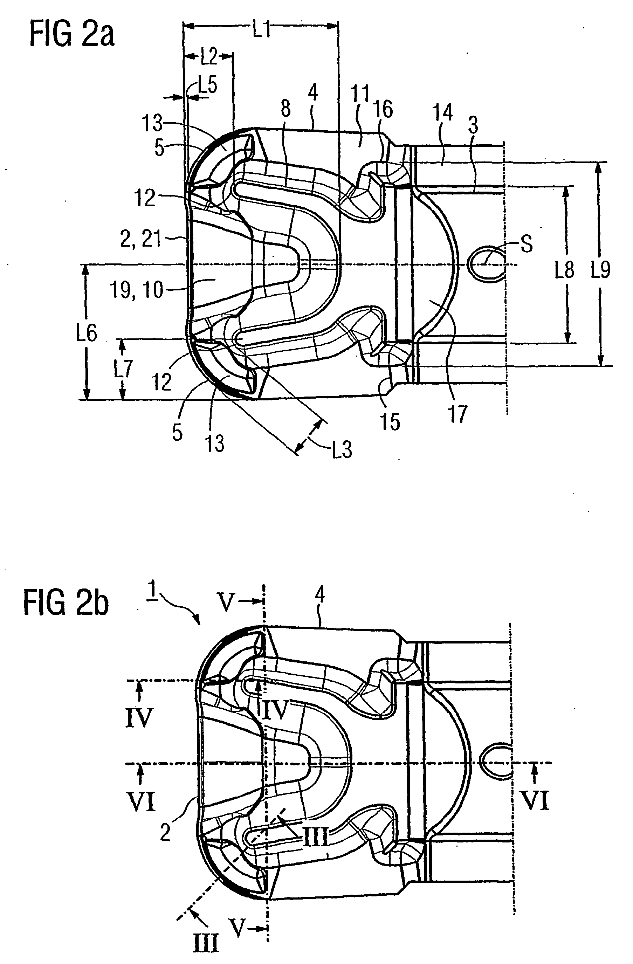

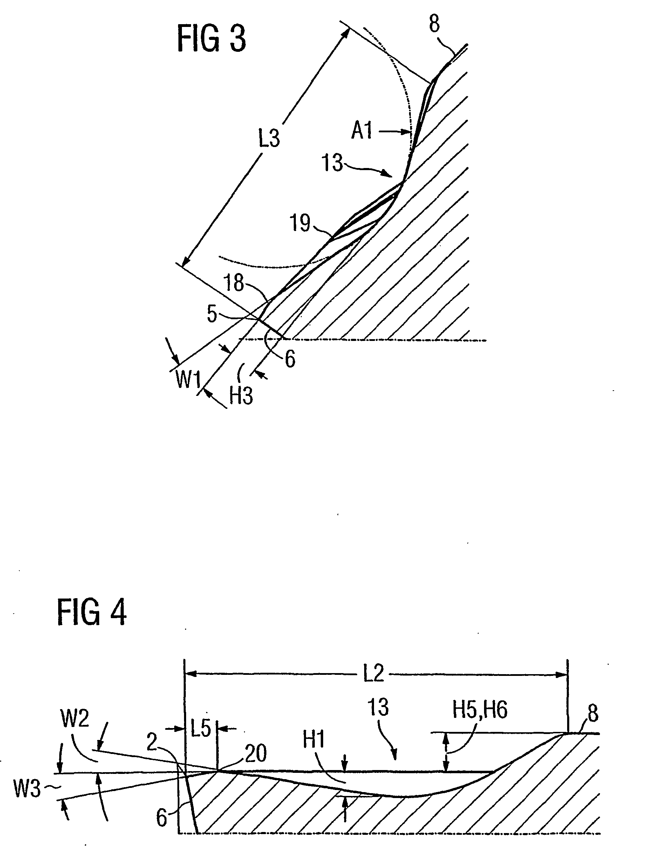

Die spanformenden und -leitenden Strukturen des Schneidkörpers 1 sind in den Fig. 2a,b sowie in den Schnitten nach den Fig. 3 bis 6 näher ersichtlich. Der Übersichtlichkeit halber sind in Fig. 2a charakteristische Maße bezeichnet, während in Fig. 2b die verschiedenen Schnittlinien eingezeichnet sind. Die Spanleitrippe 8 weist eine von der Hauptschneide 2 aus gemessene Tiefe L1 sowie einen Abstand L2 von der Hauptschneide 2 auf. Die Tiefe L1 beträgt mindestens das Doppelte und höchstens das Fünffache des Abstandes L2. Die Hälfte der Breite des Schneidkörpers 1, entsprechend dem Abstand jeder Nebenschneide 4 von einer längs des Schneidkörpers 1 verlaufenden Symmetrielinie S, ist als Halbbreite L6 bezeichnet. Die Breite jedes Eckspanformers 13, in Querrichtung des Schneidkörpers 1, d.h. in Erstreckungsrichtung der Hauptschneide 2 gemessen, ist mit L7 bezeichnet. Das Verhältnis zwischen der Breite L7 des Eckspanformers 13 und der Halbbreite L6 der Hauptschneide 2 liegt zwischen 0,3 und 0,6, insbesondere bei ca. 0,45. Die Eckspanformer 13 sind jeweils als in der Draufsicht gekrümmte Spanformmulden ausgebildet, welche sowohl von den Schneidenecken 5 als auch von den Enden 12 der Spanleitrippe 8 nur gering beabstandet sind. Der diagonal zur Hauptschneide 2 gemessene Abstand des Endes 12 des Eckspanformers 13 von der Schneidenecke 5 ist mit L3 bezeichnet und beträgt etwas weniger als der in Längsrichtung des Schneidkörpers 1 gemessene Abstand L2 des Endes 12 des Eckspanformers 13 von der Hauptschneide 2. Die auf der der Hauptschneide 2 abgewandten Seite der Spanleitrippe 8 an diese anschließende, sich quer zu den Nebenschneiden 4 erstreckende Querrippe 16 weist eine Breite L9, die daran anschließende Spannrippe 3 eine Breite L8 auf. Im mittleren Bereich des Schneidkörpers 1, in welchem die Spannrippe 3 angeordnet ist, ist dieser im Vergleich zum vorderen Bereich, in welchem die Schneiden 2, 4 angeordnet sind, in an sich üblicher Weise verjüngt.

Die Fig. 3 und 4 zeigen jeweils einen Schnitt in Längsrichtung des Schneidkörpers 1 beziehungsweise in Diagonalrichtung durch den als der Spanleitrippe 8 vorgelagerte Vertiefung ausgebildeten Eckspanformer 13. Die vertikale Ausdehnung des Eckspanformers 13, gemessen senkrecht zur von den Schneiden 2, 4 aufgespannten Ebene, ist in beiden Schnitten als Höhe H3, H4 eingezeichnet und ist in beiden Fällen gleich groß. Am Ende 12 der eine Spanstufe bildenden Spanleitrippe 8 weist diese eine Höhe H5 auf, gemessen in Relation zum umgebenden Niveau der Langdreh-Spankammer 11, welche der Höhe H6 der Querrippe 16 entspricht. Der Eckspanformer 13 hat im Querschnitt eine konkave Oberfläche, wobei im diagonalen Schnitt eine gekrümmte Vertiefung mit einem Radius A1 vorhanden ist. Der Winkel, welcher an einer vom Schneideneck 5 geringfügig beabstandeten Knickstelle 18 zwischen dem bis zu dieser Stelle horizontalen Verlauf der Spanfläche 19 und dem hier beginnenden Verlauf des als Spanformmulde ausgebildeten Eckspanformers 13 gebildet ist, ist im Fall des diagonalen Schnitts als erster Winkel W1 bezeichnet und beträgt ca. 10° bis 15°. Im Fall des Schnitts in Längsrichtung des Schneidkörpers 1 ist der entsprechende, an einer geringfügig von der Hauptschneide 2 beabstandeten Knickstelle 20 gebildete Winkel als zweiter Winkel W2 bezeichnet und beträgt mit ca. 7° bis 12° etwa drei Viertel des ersten Winkels W1. Die Spanfläche zwischen der Hauptschneide 2 und der Knickstelle 20 verläuft nicht horizontal, was der Lage der Nebenschneiden 4 entsprechen würde, sondern ist um einem dritten Winkel W3 von 0° bis 15° nach unten abgeknickt. Der Abstand zwischen der Knickstelle 20, d.h. dem Rand des Eckspanformers 13 und der Hauptschneide 2 ist mit L5 bezeichnet.

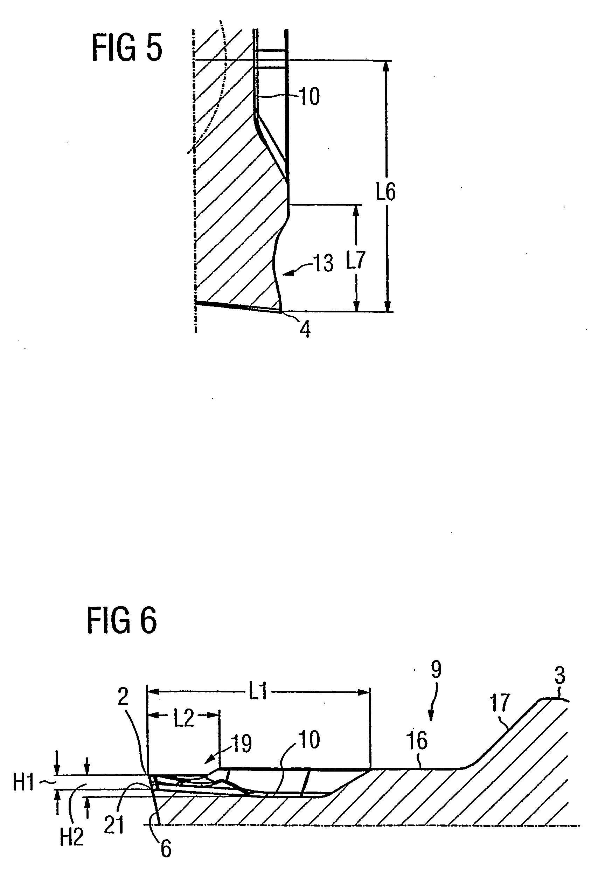

Die Form der Stechspankammer 10 ist anhand der Fig. 5 und 6 näher ersichtlich. Die Stechspankammer 10 geht aus von einem Mittelabschnitt 21 der Hauptschneide 2 (vgl. Fig. 1 und Fig. 2 a,b), welcher in Relation zu den Schneidenecken 5 um eine Absenkung H1 abgesenkt ist. In Richtung zur Spannrippe 3 verläuft die Stechspankammer 10 abfallend, wobei eine maximale Vertiefung H2, bezogen auf das Niveau der Schneidenecken 5, etwa etwa um die Hälfte größer als die Absenkung H1 ist.

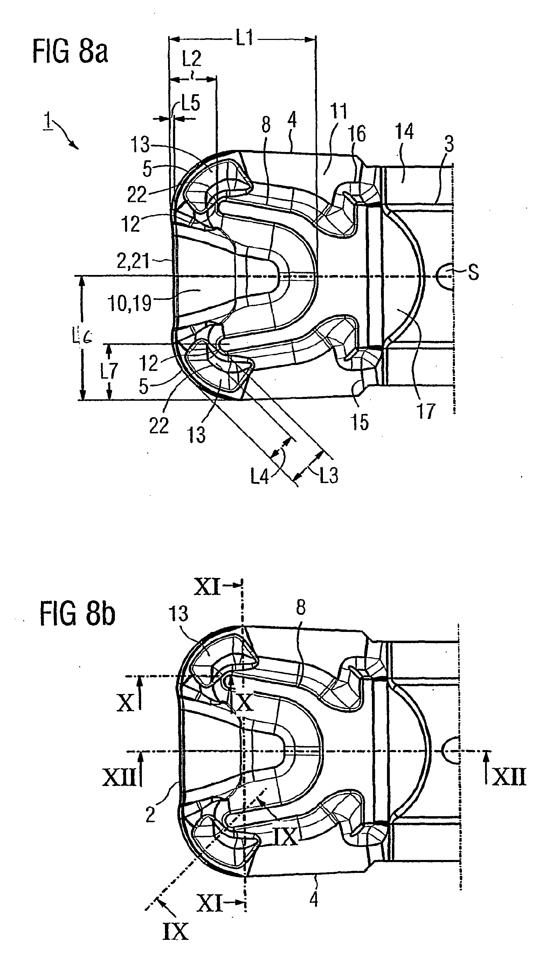

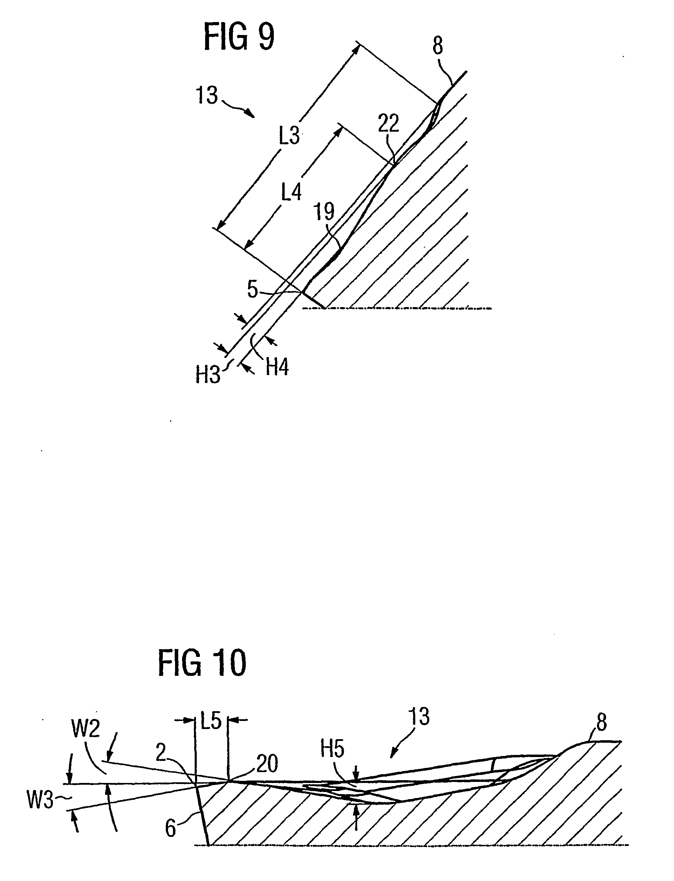

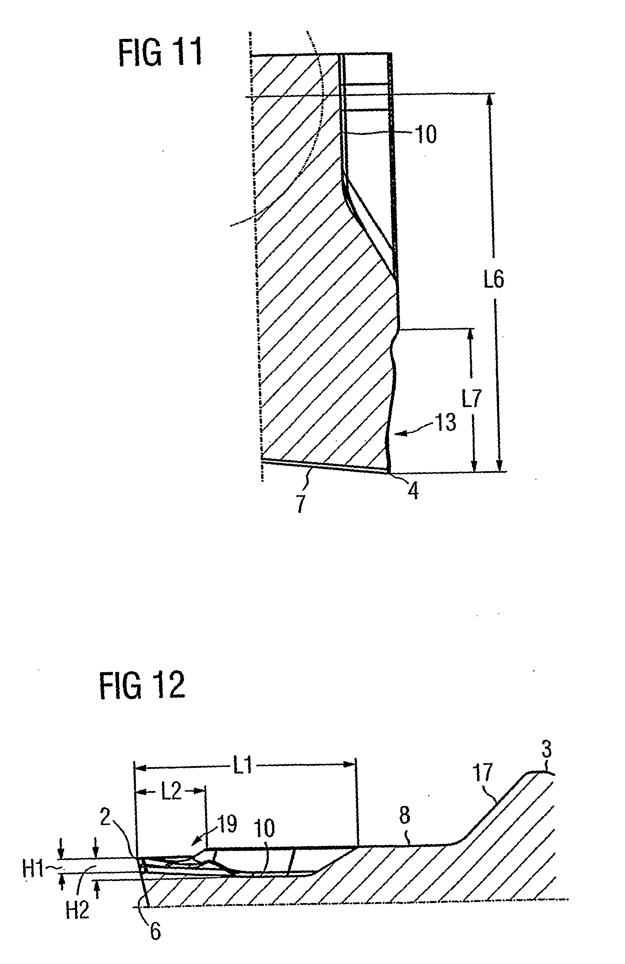

Ein zweites Ausführungsbeispiel ist in den Fig. 7 bis 12 in Ansichten analog den Fig. 1 bis 6 dargestellt. Dieses unterscheidet sich vom vorstehend erläuterten Ausführungsbeispiel hauptsächlich dadurch, dass die Eckspanformer 13 nicht als Spanformmulde sondern als Spanformerhebung ausgebildet sind. Deren höchstgelegene Kammlinie 22 ist, wie insbesondere aus dem diagonalen Schnitt nach Fig. 9 hervorgeht, deutlich von der Spanleitrippe 8 abgesetzt und weist einen Abstand L4 von der Schneidenecke 5 auf. Die Höhe H3 des Eckspanformers 13 beträgt etwa 50% bis 80% der Höhe H4 der Spanleitrippe 8. Der Eckspanformer tritt insbesondere bei geringen Schnitttiefen in Funktion und sorgt damit in allen Betriebsweisen des Schneidkörpers 1 für eine definierte Spanbildung.

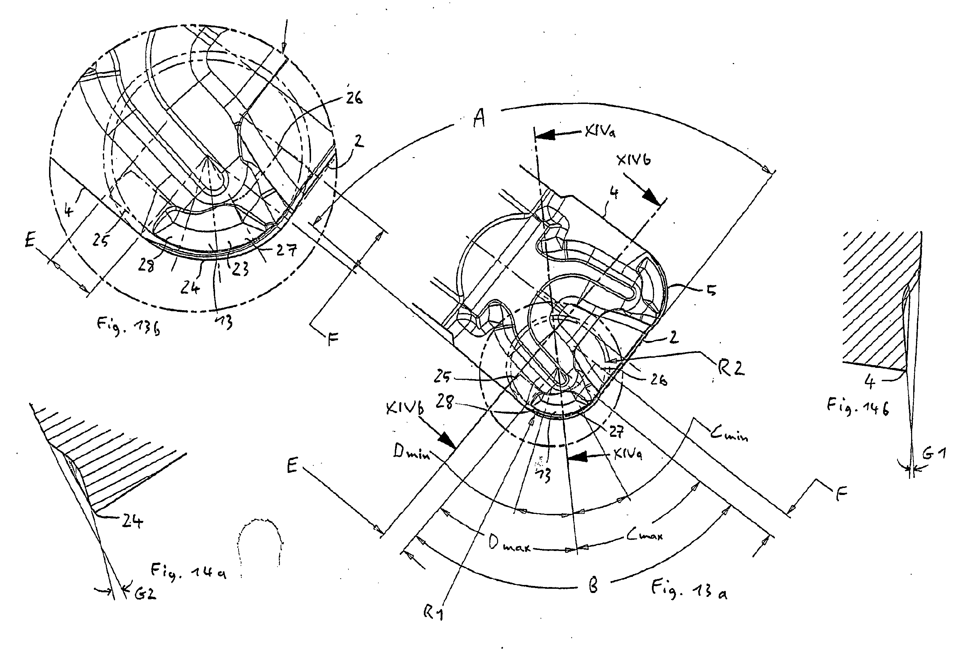

Die Fig. 13 a,b und 14 a,b zeigen ausschnittsweise ein weiteres Ausführungsbeispiel eines Schneidkörpers 1 zum Stech- und Längsdrehen. Der Eckspanformer 13 ist in diesem Fall ähnlich wie im Ausführungsbeispiel nach den Fig. 1 bis 6 als Spanformmulde ausgebildet, ist jedoch sowohl in Richtung zur Hauptschneide 2 als auch in Richtung zur Nebenschneide 4 verlängert. Der mittlere Abschnitt des Eckspanformers 1 wird als Bogenabschnitt 23 bezeichnet und weist einen mit R2 bezeichneten äußeren Radius auf, der mindestens 80% und höchstens 95% des Radius R1 der die Hauptschneide 2 mit der Nebenschneide 4 verbindenden Eckschneidkante 24 im Bereich des Schneidenecks 5 beträgt. Die Verlängerungen des Eckspanformers 13 zur Nebenschneide 4 beziehungsweise zur Hauptschneide 2 hin werden als erster Linearabschnitt 25 sowie zweiter Linearabschnitt 26 bezeichnet und sind in den Fig. 13 a,b gestrichelt dargestellt. Zwischen dem zentralen Bogenabschnitt 23 des Eckspanformers 13 und den sich anschließenden Linearabschnitten 25,26 sind vorzugsweise keine Kanten oder Stufen gebildet.

Die Nebenschneide 4 schließt mit der Hauptschneide 2 einen Winkel A von knapp 90° ein. Der komplementäre Winkel (180°-A) wird als Winkel B bezeichnet und gibt denjenigen Winkel an, über den die Eckschneidkante 24 gekrümmt ist. Der in Fig. 14 a dargestellte Schnitt zeigt den Querschnitt des Eckspanformers 13 im Bereich der Winkelhalbierenden zwischen den Schneiden 2,4. Der Bogenabschnitt 23 des Eckspanformers 13 wird durch diese Winkelhalbierende gedanklich unterteilt in einen der Hauptschneide 2 zugewandten ersten Spanformerabschnitt 27 sowie einen der Nebenschneide 4 zugewandten zweiten Spanformerabschnitt 28. Jeder der Spanformerabschnitte 27,28 erstreckt sich über einen Winkel C beziehungsweise D, der mindestens ein Viertel und höchstens die Hälfte des von der Eckschneidkante 24 beschriebenen Winkels B beträgt, wie in Fig. 13a durch die Winkelangaben Cₘᵢₙ, Cₘₐₓ sowie Dₘᵢₙ, Dₘₐₓ angegeben.

Die Breite des Eckspanformers 13 nimmt, senkrecht zur jeweils benachbarten Schneide 2,4,24 gemessen, vom ersten Spanformerabschnitt 27 zum zweiten Spanformerabschnitt 28 ab. Die Linearabschnitte 25, 26 schließen sich ohne sprunghafte Änderung der Breite an die zentralen Spanformerabschnitte 27,28 an, so dass der der Hauptschneide 2 benachbarte zweite Linearabschnitt 26 breiter ist als der der Nebenschneide 4 zugewandte erste Linearabschnitt 25. Die mit E beziehungsweise F bezeichnete Länge beider Linearabschnitte 25,26 ist im Ausführungsbeispiel gleich und beträgt weniger als 50% des Radius R1 der Eckschneidkante 24.

Die Tiefe des Eckspanformers 13 nimmt, wie aus einem Vergleich der Fig. 14a und 14b hervorgeht, von innen nach außen, d.h. vom Bogenabschnitt 23 zu den Linearabschnitten 25,26, ab. In jedem Bereich des Eckspanformers 13 ist dessen der jeweils benachbarten Schneidkante 2,4,24 zugewandter Oberflächenbereich, um eine muldenartige Vertiefung zu schaffen, relativ zu einer Ebene, die durch die Lage der Schneidkanten 2,4,24 gegeben ist, schräg gestellt. Der Schrägstellungswinkel wird als Flankenwinkel G1,G2 bezeichnet. Dabei beträgt der Flankenwinkel G2 in der Mitte des Bogenabschnitts 23, d.h. im Bereich der Winkelhalbierenden, das 1,5- bis Zweifache des Flamkenwinkel G1 im Bereich der Linearbaschnitte 25,26. Die Unterstützung der Spanformung durch den Eckspanformer 13 ist damit am Schneideneck 5 besonders stark ausgeprägt.

## Patentansprüche

1. Schneidkörper, insbesondere zum Stech- und Längsdrehen, mit einer Hauptschneide (2), an die sich beidseitig jeweils über ein Schneideneck (5) eine Nebenschneide (4) anschließt, und mit einer der Hauptschneide (2) zugeordneten Stechspankammer (10) sowie mit jeder der Nebenschneiden (4) zugeordneten Langdreh-Spankammern (11) und mit Spanstufen, die an die Stechspankammer (10) beziehungsweise die Langdreh-Spankammern (11) anschließen und ein Teil der Flanken einer Spanleitrippe (8) bilden, welche bogenförmig, mit der Hauptschneide (2) zugewandter Bogenöffnung, ausgebildet ist,
**dadurch gekennzeichnet,**
**dass** zwischen den Schneidenecken (5) und den Enden (12) der Spanleitrippe (8) jeweils ein zusätzlicher und den Zwischenraum zwischen den Enden (12) der Spanleitrippe (8) und den Schneidenecken (5) ausfüllender Eckspanformer (13) gebildet ist.

2. Schneidkörper nach Anspruch 1,
**dadurch gekennzeichnet,**
**dass** der Eckspanformer (13) eine Spanformmulde aufweist.

3. Schneidkörper nach Anspruch 1 oder 2,
**dadurch gekennzeichnet,**
**dass** der Eckspanformer (13) eine Spanformerhebung aufweist.

4. Schneidkörper nach einem der Ansprüche 1 bis 3,
**dadurch gekennzeichnet,**
**dass** der Eckspanformer (13) bogenförmig, mit dem benachbarten Ende (12) der Spanleitrippe (8) zugewandter Bogenöffnung, ausgebildet ist.

5. Schneidkörper nach Anspruch 4,
**dadurch gekennzeichnet,**
**dass** der Eckspanformer (13) einen Bogenabschnitt (23) aufweist, dessen äußerer Radius (R2) mindestens 80% des Radius (R1) der eine Nebenschneide (4) mit der Hauptschneide (2) verbindenden Eckschneidkante (24) beträgt.

6. Schneidkörper nach Anspruch 4 oder 5,
**dadurch gekennzeichnet,**
**dass** der Eckspanformer (13) einen Bogenabschnitt (23) aufweist, dessen äußerer Radius (R2) höchstens 95% des Radius (R1) der eine Nebenschneide (4) mit der Hauptschneide (2) verbindenden Eckschneidkante (24) beträgt.

7. Schneidkörper nach einem der Ansprüche 4 bis 6,
**dadurch gekennzeichnet,**
**dass** der Bogenabschnitt (23) des Eckspanformers (13) einen der Hauptschneide (2) zugewandten ersten Spanformerabschnitt (27) und einen einer Nebenschneide (4) zugewandten zweiten Spanformerabschnitt (28) aufweist.

8. Schneidkörper nach Anspruch 7,
**dadurch gekennzeichnet,**
**dass** die Breite des Bogenabschnitts (23) des Eckspanformers (13), senkrecht zur Schneidkante (2,4,24) gemessen, vom ersten Spanformerabschnitt (27) zum zweiten Spanformerabschnitt (28) abnimmt.

9. Schneidkörper nach Anspruch 7 oder 8,
**dadurch gekennzeichnet,**
**dass** sich ein Spanformerabschnitt (27,28) über einen Winkel (C,D) erstreckt, der mindestens ein Viertel des von der Eckschneidkante (24) beschriebenen Winkels (B) beträgt.

10. Schneidkörper nach einem der Ansprüche 7 bis 9,
**dadurch gekennzeichnet,**
**dass** sich ein Spanformerabschnitt (27,28) über einen Winkel (C,D) erstreckt, der höchstens die Hälfte des von der Eckschneidkante (24) beschriebenen Winkels (B) beträgt.

11. Schneidkörper nach einem der Ansprüche 4 bis 10,
**dadurch gekennzeichnet,**
**dass** der Eckspanformer (13) einen an den Bogenabschnitt (23) anschließenden, sich in Richtung einer Nebenschneide (4) erstreckenden ersten Linearabschnitt (25) aufweist.

12. Schneidkörper nach einem der Ansprüche 4 bis 11,
**dadurch gekennzeichnet,**
**dass** der Eckspanformer (13) einen an den Bogenabschnitt (23) anschließenden, sich in Richtung der Hauptschneide (2) erstreckenden zweiten Linearabschnitt (26) aufweist.

13. Schneidkörper nach Anspruch 11 oder 12,
**dadurch gekennzeichnet,**
**dass** die Länge (E,F) eines Linearabschnitts (25,26) höchstens die Hälfte des äußeren Radius (R2) des Eckspanformers (13) beträgt.

14. Schneidkörper nach einem der Ansprüche 11 bis 13,
**dadurch gekennzeichnet,**
**dass** der Eckspanformer (13) im Bereich des Bogenabschnitts (23) einen Flankenwinkel (G2) aufweist, welcher mindestens das 1,5-fache des Flankenwinkels (G1) im Bereich eines Linearabschnitts (25,26) beträgt.

15. Schneidkörper nach einem der Ansprüche 11 bis 14,
**dadurch gekennzeichnet,**
**dass** der Eckspanformer (13) im Bereich des Bogenabschnitts (23) einen Flankenwinkel (G2) aufweist, welcher höchstens das Zweifache des Flankenwinkels (G1) im Bereich eines Linearabschnitts (25,26) beträgt.

16. Schneidkörper nach einem der Ansprüche 1 bis 15,
**dadurch gekennzeichnet,**
**dass** die Hauptschneide (2) einen in Relation zu den Schneidenecken (5) um eine Absenkung (H1) abgesenkten Mittelabschnitt (21) aufweist.

17. Schneidkörper nach Anspruch 16,
**dadurch gekennzeichnet,**
**dass** die Höhe (H3) des Eckspanformers (13) geringer als die Absenkung (H1) des Mittelabschnitts (21) der Hauptschneide (2) ist.

18. Schneidkörper nach einem der Ansprüche 1 bis 17,
**dadurch gekennzeichnet,**
**dass** die Höhe (H3) des Eckspanformers (13) nicht größer als die Höhe (H5) der Spanleitrippe (8) ist.

19. Schneidkörper nach einem der Ansprüche 1 bis 18,
**dadurch gekennzeichnet,**
**dass** die Breite (L7) des Eckspanformers (13) mindestens 30 % der Halbbreite (L6) der Hauptschneide (2) beträgt.

20. Schneidkörper nach einem der Ansprüche 1 bis 19,
**dadurch gekennzeichnet,**
**dass** die Breite (L7) des Eckspanformers (13) höchstens 60 % der Halbbreite (L6) der Hauptschneide (2) beträgt.

21. Schneidkörper nach einem der Ansprüche 1 bis 20,
**gekennzeichnet durch**
eine sich an die Spanleitrippe (8) auf deren der Hauptschneide (2) abgewandter Seite anschließende Querrippe (16).

22. Schneidkörper nach Anspruch 21,
**dadurch gekennzeichnet,**
**dass** die Breite (L9) der Querrippe (16) größer ist als die Breite (L8) einer an diese anschließenden Spannrippe (3).

23. Schneidkörper nach Anspruch 21 oder 22,
**dadurch gekennzeichnet,**
**dass** die Höhe (H6) der Querrippe (16) der Höhe (H5) der Spanleitrippe (8) entspricht.

## Claims

1. Cutting body, in particular for end-cut turning and longitudinal turning, comprising a primary cutting edge (2) adjoined on each of its two sides, via an outer corner (5), by a secondary cutting edge (4), and comprising an end-cut chip space (10) assigned to the primary cutting edge (2), and further comprising longitudinal turning chip spaces (11) assigned to each of the secondary cutting edges (4), and comprising step chip breakers, which adjoin the end-cut chip space (10) and the longitudinal turning chip spaces (11) respectively and form a part of the flanks of a chip-guiding rib (8), which is configured in an arc shape, with the arc opening facing the primary cutting edge (2), **characterized in that** between the outer corners (5) and the ends (12) of the chip-guiding rib (8) there is respectively formed an additional corner chip breaker (13) filling the interspace between the ends (12) of the chip-guiding rib (8) and the outer corners (5).

2. Cutting body according to Claim 1, **characterized in that** the corner chip breaker (13) has a chip-breaking depression.

3. Cutting body according to Claim 1 or 2, **characterized in that** the corner chip breaker (13) has a chip-breaking elevation.

4. Cutting body according to one of Claims 1 to 3, **characterized in that** the corner chip breaker (13) is configured in an arc shape, having an arc opening facing the adjacent end (12) of the chip-guiding rib (8).

5. Cutting body according to Claim 4, **characterized in that** the corner chip breaker (13) has a curved portion (23), the outer radius (R2) of which measures at least 80% of the radius (R1) of the corner cutting edge (24) connecting a secondary cutting edge (4) to the primary cutting edge (2).

6. Cutting body according to Claim 4 or 5, **characterized in that** the corner chip breaker (13) has a curved portion (23), the outer radius (R2) of which measures no more than 95% of the radius (R1) of the corner cutting edge (24) connecting a secondary cutting edge (4) to the primary cutting edge (2).

7. Cutting body according to one of Claims 4 to 6, **characterized in that** the curved portion (23) of the corner chip breaker (13) has a first chip breaker portion (27) facing the primary cutting edge (2) and a second chip breaker portion (28) facing a secondary cutting edge (4).

8. Cutting body according to Claim 7, **characterized in that** the width of the curved portion (23) of the corner chip breaker (13), measured perpendicular to the cutting edge (2, 4, 24), decreases from the first chip breaker portion (27) to the second chip breaker portion (28).

9. Cutting body according to Claim 7 or 8, **characterized in that** a chip breaker portion (27, 28) extends over an angle (C, D) which measures at least one-quarter of the angle (B) described by the corner cutting edge (24).

10. Cutting body according to one of Claims 7 to 9, **characterized in that** a chip breaker portion (27, 28) extends over an angle (C, D) which measures no more than half of the angle (B) described by the corner cutting edge (24).

11. Cutting body according to one of Claims 4 to 10, **characterized in that** the corner chip breaker (13) has a first linear portion (25) adjoining the curved portion (23) and extending in the direction of a secondary cutting edge (4).

12. Cutting body according to one of Claims 4 to 11, **characterized in that** the corner chip breaker (13) has a second linear portion (26) adjoining the curved portion (23) and extending in the direction of the primary cutting edge (2).

13. Cutting body according to Claim 11 or 12, **characterized in that** the length (E, F) of a linear portion (25, 26) measures no more than half of the outer radius (R2) of the corner chip breaker (13).

14. Cutting body according to one of Claims 11 to 13, **characterized in that** the corner chip breaker (13) has in the region of the curved portion (23) a flank angle (G2) which measures at least one and a half times the flank angle (G1) in the region of a linear portion (25, 26).

15. Cutting body according to one of Claims 11 to 14, **characterized in that** the corner chip breaker (13) has in the region of the curved portion (23) a flank angle (G2) which measures no more than double the flank angle (G1) in the region of a linear portion (25, 26).

16. Cutting body according to one of Claims 1 to 15, **characterized in that** the primary cutting edge (2) has a middle portion (21) which is lowered in relation to the outer corners (5) by a drop (H1).

17. Cutting body according to Claim 16, **characterized in that** the height (H3) of the corner chip breaker (13) is less than the drop (H1) of the middle portion (21) of the primary cutting edge (2).

18. Cutting body according to one of Claims 1 to 17, **characterized in that** the height (H3) of the corner chip breaker (13) is no greater than the height (H5) of the chip-guiding rib (8).

19. Cutting body according to one of Claims 1 to 18, **characterized in that** the width (L7) of the corner chip breaker (13) measures at least 30% of the half-width (L6) of the primary cutting edge (2).

20. Cutting body according to one of Claims 1 to 19, **characterized in that** the width (L7) of the corner chip breaker (13) measures no more than 60% of the half-width (L6) of the primary cutting edge (2).

21. Cutting body according to one of Claims 1 to 20, **characterized by** a transverse rib (16) adjoining the chip-guiding rib (8) on the side thereof facing away from the primary cutting edge (2).

22. Cutting body according to Claim 21, **characterized in that** the width (L9) of the transverse rib (16) is greater than the width (L8) of a chip rib (3) adjoining the said transverse rib.

23. Cutting body according to Claim 21 or 22, **characterized in that** the height (H6) of the transverse rib (16) corresponds to the height (H5) of the chip-guiding rib (8).

## Revendications

1. Corps de coupe, en particulier pour le tournage en plongée et pour le tournage longitudinal, comportant un tranchant principal (2) auquel se raccorde de part et d'autre un tranchant secondaire (4) via un coin de tranchants respectif (5), et comportant une chambre à copeaux de tournage en plongée (10) associée au tranchant principal (2) ainsi que des chambres à copeaux de tournage longitudinal (11) associées respectivement à chacun des tranchants secondaires (4), et des gradins à copeaux qui se raccordent respectivement à la chambre à copeaux de tournage en plongée (10) et aux chambres à copeaux de tournage longitudinal (11) et qui forment une partie des flancs d'une nervure guide-copeaux (8) qui est réalisée en forme arquée avec une ouverture d'arc tournée vers le tranchant principal (2),
**caractérisé en ce que**
entre les coins de tranchants (5) et les extrémités (12) de la nervure guide-copeaux (8) est réalisé un élément de formage de copeaux de coin (13) respectif supplémentaire remplissant l'intervalle entre les extrémités (12) de la nervure guide-copeaux (8) et les coins de tranchants (5).

2. Corps de coupe selon la revendication 1,
**caractérisé en ce que**
l'élément de formage de copeaux de coin (13) présente une cavité de formage de copeaux.

3. Corps de coupe selon la revendication 1 ou 2,
**caractérisé en ce que**
l'élément de formage de copeaux de coin (13) présente un bossage de formage de copeaux.

4. Corps de coupe selon l'une des revendications 1 à 3,
**caractérisé en ce que**
l'élément de formage de copeaux de coin (13) est réalisé en forme arquée avec l'ouverture d'arc tournée vers l'extrémité voisine (12) de la nervure guide-copeaux (8).

5. Corps de coupe selon la revendication 4,
**caractérisé en ce que**
l'élément de formage de copeaux de coin (13) présente une portion arquée (23) dont le rayon extérieur (R2) est au moins 80 % du rayon (R1) de l'arête tranchante de coin (24) reliant un tranchant secondaire (4) au tranchant principal (2).

6. Corps de coupe selon la revendication 4 ou 5,
**caractérisé en ce que**
l'élément de formage de copeaux de coin (13) présente une portion arquée (23) dont le rayon extérieur (R2) est au maximum 95 % du rayon (R1) de l'arête tranchante de coin (24) reliant un tranchant secondaire (4) au tranchant principal (2).

7. Corps de coupe selon l'une des revendications 4 à 6,
**caractérisé en ce que**
la portion arquée (23) de l'élément de formage de copeaux de coin (13) comprend une première portion de formage de copeaux (27) tournée vers le tranchant principal (2) et une seconde portion de formage de copeaux (28) tournée vers un tranchant secondaire (4).

8. Corps de coupe selon la revendication 7,
**caractérisé en ce que**
la largeur de la portion arquée (23) de l'élément de formage de copeaux de coin (13), mesurée perpendiculairement à l'arête tranchante (2, 4, 24), diminue de la première portion de formage de copeaux (27) vers la seconde portion de formage de copeaux (28).

9. Corps de coupe selon la revendication 7 ou 8,
**caractérisé en ce que**
une portion de formage de copeaux (27, 28) s'étend sur un angle (C, D) qui est au moins un quart de l'angle (B) décrit par l'arête tranchante de coin (24).

10. Corps de coupe selon l'une des revendications 7 à 9,
**caractérisé en ce que**
une portion de formage de copeaux (27, 28) s'étend sur un angle (C, D) qui est au maximum la moitié de l'angle (B) décrit par l'arête tranchante de coin (24).

11. Corps de coupe selon l'une des revendications 4 à 10,
**caractérisé en ce que**
l'élément de formage de copeaux de coin (13) comprend une première portion linéaire (25) qui se raccorde à la portion arquée (23) et qui s'étend dans la direction d'un tranchant secondaire (4).

12. Corps de coupe selon l'une des revendications 4 à 11,
**caractérisé en ce que**
l'élément de formage de copeaux de coin (13) comprend une seconde portion linéaire (26) qui se raccorde à la portion arquée (23) et qui s'étend dans la direction du tranchant principal (2).

13. Corps de coupe selon la revendication 11 ou 12,
**caractérisé en ce que**
la longueur (E, F) d'une portion linéaire (25, 26) est au maximum la moitié du rayon extérieur (R2) de l'élément de formage de copeaux de coin (13).

14. Corps de coupe selon l'une des revendications 11 à 13,
**caractérisé en ce que**
l'élément de formage de copeaux de coin (13) comprend dans la zone de la portion arquée (23) un angle de flanc (G2) qui est au moins 1,5 fois l'angle de flanc (G1) dans la zone d'une portion linéaire (25, 26).

15. Corps de coupe selon l'une des revendications 11 à 14,
**caractérisé en ce que**
l'élément de formage de copeaux de coin (13) comprend dans la zone de la portion arquée (23) un angle de flanc (G2) qui est au maximum le double de l'angle de flanc (G1) dans la zone d'une portion linéaire (25, 26).

16. Corps de coupe selon l'une des revendications 1 à 15,
**caractérisé en ce que**
le tranchant principal (2) comprend une portion médiane (21) abaissée d'une distance d'abaissement (H1) par rapport aux coins de tranchants (5).

17. Corps de coupe selon la revendication 16,
**caractérisé en ce que**
la hauteur (H3) de l'élément de formage de copeaux de coin (13) est inférieure à la distance d'abaissement (H1) de la portion médiane (21) du tranchant principal (2).

18. Corps de coupe selon l'une des revendications 1 à 17,
**caractérisé en ce que**
la hauteur (H3) de l'élément de formage de copeaux de coin (13) n'est pas supérieure à la hauteur (H5) de la nervure guide-copeaux (8).

19. Corps de coupe selon l'une des revendications 1 à 18,
**caractérisé en ce que**
la largeur (L7) de l'élément de formage de copeaux de coin (13) est au minimum 30 % de la demi-largeur (L6) du tranchant principal (2).

20. Corps de coupe selon l'une des revendications 1 à 19,
**caractérisé en ce que**
la largeur (L7) de l'élément de formage de copeaux de coin (13) est au maximum 60 % de la demi-largeur (L6) du tranchant principal (2).

21. Corps de coupe selon l'une des revendications 1 à 20,
**caractérisé par**
une nervure transversale (16) qui se raccorde à la nervure guide-copeaux (8) sur son côté détourné du tranchant principal (2).

22. Corps de coupe selon la revendication 21,
**caractérisé en ce que**
la largeur (L9) de la nervure transversale (16) est supérieure à la largeur (L8) d'une nervure de serrage (3) qui se raccorde à celle-ci.

23. Corps de coupe selon la revendication 21 ou 22,
**caractérisé en ce que**
la hauteur (H6) de la nervure transversale (16) correspond à la hauteur (H5) de la nervure guide-copeaux (8).
